(19) Europäisches Patentamt
European Patent Office
Office européen des brevets

(11) **EP 0 823 797 B1**

(12) **EUROPÄISCHE PATENTSCHRIFT**

(45) Veröffentlichungstag und Bekanntmachung des Hinweises auf die Patenterteilung:
**21.04.2004   Patentblatt 2004/17**

(51) Int Cl.⁷: **H04B 7/26**, H04Q 7/32

(21) Anmeldenummer: **97202431.9**

(22) Anmeldetag: **04.08.1997**

(54) **Mobilfunkendgerät mit Mitteln zur Synchronisierung von Datenströmen**

Mobile radio terminal with means for synchronisation of data streams

Terminal radio mobile avec moyens de synchronisation de flux de données

(84) Benannte Vertragsstaaten:
**DE FR GB**

(30) Priorität: **07.08.1996   DE 19631874**

(43) Veröffentlichungstag der Anmeldung:
**11.02.1998   Patentblatt 1998/07**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder: **Richter, Thomas, Dipl.-Math.**
**Röntgenstrasse 24, 22335 Hamburg (DE)**

(74) Vertreter: **Volmer, Georg, Dipl.-Ing. et al**
**Philips Intellectual Property & Standards GmbH,**
**Weisshausstrasse 2**
**52066 Aachen (DE)**

(56) Entgegenhaltungen:
• **DATABASE ETSI [Online] European Telecommunication Standard; ETS 300 578 (GSM 05.08 version 4.12.0), Juli 1995 (1995-07) XP002186491**
• **HODGES M R L: "THE GSM RADIO INTERFACE" BRITISH TELECOM TECHNOLOGY JOURNAL, LONDON, GB, Bd. 8, Nr. 1, 1990, Seiten 31-43, XP000575496**

**Beschreibung**

Die Erfindung bezieht sich auf ein Mobilfunkendgerät mit Mitteln zur Synchronisierung auf von Basisstationen eines zellularen Mobilfunksystems gesendete und über Funkkanäle übertragene Datenströme.

GSM-Mobilfunksysteme (Global System for Mobile communications) verfügen über ein Netz aus Funkzellen. Jede Funkzelle weist eine Basisstation auf, die Funksignale für in einer solchen Funkzelle befindliche Mobilfunkendgeräte ausstrahlt, wobei ein Datenverkehr zwischen einer Basisstation und Mobilfunkendgeräten über Funkkanäle unter Anwendung der TDMA-Multiplextechnik ("Time Division Multiple Access") erfolgt. Bewegt sich ein Benutzer eines Mobilfunkendgerätes mit seinem Gerät von einer Funkzelle zur einer Nachbarfunkzelle muß sichergestellt sein, daß ohne Unterbrechung eine bidirektionale Funkverbindung zu mindestens einer Basisstation mit für einen fehlerfreien Datenaustausch ausreichender Qualität zur Verfügung steht. Dazu überwacht ein im Betrieb befindliches Mobilfunkendgerät alle zur Verfügung stehenden RF-Kanäle ("Radio Frequency"-Funkkanäle) des Mobilfunksystems (vgl. GSM 05.08, DRAFT pr ETS 300 578, März 1995, Second Edition, worauf sich auch die folgenden Ausführungen zum Stand der Technik beziehen; bei der Zitierung von anderen Teilen der GSM-Empfehlungen ist im folgenden auch die entsprechende Version mit Datum März 1995 gemeint). Hierbei werden die Empfangspegel der RF-Kanäle gemessen und aus mehreren gemessenen Empfangspegeln eines RF-Kanals jeweils ein mittlerer Empfangspegel bestimmt. Zum Zweck der Auswahl oder Wiederwahl einer Funkzelle ("cell selection", "cell reselection"), d.h. zum Aufbau einer Verbindung zur Basisstation einer solchen Funkzelle, muß das Mobilfunkendgerät in der Lage sein, sich auf die Trägerfrequenz eines von der Basisstation ausgesendeten sogenannten BCCH ("Broadcast Control Channel", Rundsende-Steuerkanal) zu synchronisieren und BCCH-Daten zu lesen. BCCH-Daten enthalten Systeminformations-Nachrichten ("system information") und den sogenannten BSIC ("Base Transceiver Station Identity Code", Basisstations-Transceiver-Code). Eine in diesem Sinne ausgewählte Funkzelle wird "serving cell" genannt. Gemäß den standardisierten GSM-Empfehlungen hat ein Mobilfunkendgerät mindestens alle dreißig Sekunden zu versuchen, den BSIC einer "serving cell" zu decodieren. Weiterhin wird verlangt, daß ein Mobilfunkendgerät mindestens alle 30 Sekunden den BSIC der anderen Funkzellen mit dem größten mittleren Empfangspegel überprüft. Der BSIC wird mittels als Synchronization Bursts (SB) bezeichnete Signalbündel über den BCCH übertragen. Auf der Grundlage der Empfangspegelauswertung und der Auswertung der BSIC wird gegebenenfalls eine sogenannte "cell change"-Funktion durchgeführt, bei der die Funktion der "serving cell" auf eine andere Funkzelle übergeht.

Die Vorgänge der Synchronisation auf eine BCCH-Trägerfrequenz und der Decodierung eines BSIC verbrauchen Energie und belasten den Energiespeicher eines Mobilfunkendgeräts. In der Regel werden Akkumulatoren als Energiespeicher verwendet. Gerade bei Mobilfunkendgeräten ist dies ein kritischer Punkt. Je geringer der Energieverbrauch zum Betreiben eines Mobilfunkendgerätes ist, desto länger kann ein solches Mobilfunkendgerät betrieben werden, bis ein erneutes Laden des Akkumulators erforderlich ist, so daß der Benutzerkomfort steigt.

Der Erfindung liegt demgemäß die Aufgabe zugrunde, ein Mobilfunkendgerät zu schaffen, dessen Energieverbrauch gegenüber bisher bekannten Mobilfunkendgeräten abgesenkt ist, ohne daß Funktionen des Mobilfunkendgerätes für einen Benutzer erkennbar beeinträchtigt werden.

Die Aufgabe wird dadurch gelöst, daß nach einem erfolglosen Versuch zur Synchronisierung auf einen einen bestimmten Empfangspegel aufweisenden ersten Funkkanal ein weiterer Versuch zur Synchronisierung auf den ersten Funkkanal nach einer von dem Empfangspegel des ersten Funkkanals abhängigen Zeitverzögerung vorgesehen ist.

Je geringer der Empfangspegel des ersten Funkkanals ist, desto weniger wahrscheinlich ist es, daß die zugehörige Basisstation bzw. Funkzelle für eine Wiederwahl ("reselection/ cell change") als "serving cell" in Betracht kommt. Ein verringerter Empfangspegel kann durch eine vergrößerte Entfernung zu der sendenden Basisstation oder auch durch Funksignalschwächung aufgrund der vorliegenden Geländegegebenheiten (Fading-Effekte) bedingt sein. Indem die Zeitverzögerung bei verringertem Empfangspegel erhöht wird, kann der Stromverbrauch des Mobilfunkendgeräts verringert werden, ohne daß die "reselection/ cell change"-Funktion des Mobilfunksystems spürbar beeinträchtigt wird. Insbesondere wird ein Mittelwert aus mehreren gemessenen Empfangspegeln des ersten Funkkanals gebildet, wobei die Zeitverzögerung dann von diesem Mittelwert abhängig ist. Es ergibt sich eine Erhöhung der Stand-By-Zeit des Mobilfunkendgeräts.

Insbesondere wird die Zeitverzögerung aus der Summe aus einem vorgebbaren Zeitverzögerungsminimalwert und einem zur Differenz des Empfangspegels eines zweiten Funkkanals, über den gerade eine Verbindung zu einer Basisstation aufgebaut ist, und des Empfangspegels des ersten Funkkanals proportionalen Wert gebildet. Über den zweiten Funkkanal besteht zum Zeitpunkt der Bestimmung der Zeitverzögerung gerade eine Verbindung zwischen dem Mobilfunkendgerät und einer "serving cell". Mit steigendem Empfangspegel des ersten Funkkanals wird die genannte Differenz und damit die Zeitverzögerung erniedrigt. Der Zeitverzögerungsminimalwert gibt bei GSM-Systemen die untere Grenze für die Zeitverzögerung gemäß den GSM-Empfehlungen an.

In einer Ausgestaltung der Erfindung ist vorgesehen, daß die Zeitverzögerung von der bisherigen Anzahl erfolgloser Versuche zur Synchronisierung auf den ersten Funkkanal und/oder von der Anzahl Funkkanäle, auf die das Mobilfunkendgerät bereits synchronisiert ist, abhängig ist. Je größer die Anzahl erfolgloser Versuche zur Synchronisierung auf den ersten Funkkanal ist, desto geringer ist die Wahrscheinlichkeit, daß überhaupt eine Synchronisierung auf den ersten Funkkanal möglich ist. Die Wahrscheinlichkeit, das die zum ersten Funkkanal gehörige Funkzelle für ein "cell change" ausgewählt wird, ist sehr gering. Weiterhin wird es mit steigender Anzahl an Funkkanälen, auf die das Mobilfunkendgerät bereits synchronisiert ist, weniger wichtig, das Mobilfunkendgerät noch auf zusätzliche Funkkanäle zu synchronisieren, denn die Wahrscheinlichkeit von Fehlfunktionen bei einem "cell change" ist schon entsprechend stark abgesenkt. In beiden Fällen führt eine Erhöhung der Zeitverzögerung bis zum nächsten Synchronisierungsversuch nur mit stark reduzierter Wahrscheinlichkeit zu "cell change"-Fehlfunktionen. Gleichzeitig wird eine weitere Reduktion des Stromverbrauchs des Mobilfunkendgeräts erreicht.

Vorzugsweise erfolgt eine Bestimmung der Zeitverzögerung gemäß den vorausgehenden Betrachtungen einerseits dadurch, daß die Summe aus einem vorgebbaren Zeitverzögerungsminimalwert und einem zur bisherigen Anzahl erfolgloser Versuche zur Synchronisierung auf den ersten Funkkanal proportionalen Wert gebildet wird, andererseits dadurch, daß eine Bestimmung der Zeitverzögerung durch die Summe aus einem vorgebbaren Zeitverzögerungsminimalwert und einem zur Anzahl Funkkanäle, auf die das Mobilfunkendgerät bereits synchronisiert ist, proportionalen Wert vorgesehen ist. Daraus ergeben sich einfache Formeln zur Bestimmung der Zeitverzögerung. Eine minimale Zeitverzögerung, wie sie in den GSM-Empfehlungen verlangt wird, ist sichergestellt.

In einer anderen Ausgestaltung ist vorgesehen; daß die Zeitverzögerung von der Geschwindigkeit des Mobilfunkendgeräts relativ zu der Basisstation, der der erste Funkkanal zugeordnet ist, abhängig ist. Je größer diese Relativgeschwindigkeit ist, desto geringer hat die entsprechende Zeitverzögerung zu sein, um sicherzustellen, daß eine Funkzellenauswahl/-wiederwahl und die damit verbundenen Synchronisierungsvorgänge möglichst weit vor dem Zeitpunkt erfolgen, an dem der maximale Empfangspegel in Bezug auf eine Funkzelle nach einem Eintritt in diese Funkzelle erreicht wird. Dann ist der Zeitraum verlängert, in dem dem Mobilfunkendgerät eine Funkverbindung mit ausreichender Qualität innerhalb einer solchen Funkzelle zur Verfügung steht. Vorzugsweise wird die Relativgeschwingigkeit zwischen dem Mobilfunkendgerät und einer Basisstation dadurch berücksichtigt, daß eine Bestimmung der Zeitverzögerung durch die Summe aus einem vorgebbaren Zeitverzögerungsminimalwert und einem zur Geschwindigkeit des Mobilfunkendgeräts relativ zu der Basisstation, der der erste Funkkanal zugeordnet ist, antiproprotionalen Wert vorgesehen ist, wodurch die Berechnung der Zeitverzögerung auf einfach zu implementierende Weise modifiziert wird.

In einer anderen Ausgestaltung der Erfindung ist vorgesehen, daß eine Anpassung der Zeitverzögerung vorgesehen ist, wobei die angepaßte Zeitverzögerung von der vorhergehenden Zeitverzögerung und der Differenz der Empfangspegel aus den letzten beiden Empfangspegelmessungen abhängig ist. Auf diese Weise kann die Zeitverzögerung etwaigen Änderungen des Empfangspegels des ersten Funkkanals am Ort des Mobilfunkendgeräts angepaßt werden. Insbesondere wird die Anpassung der Zeitverzögerung dadurch realisiert, daß die angepaßte Zeitverzögerung die Summe aus der vorhergehenden Zeitverzögerung und einem zur Differenz der Empfangspegel aus den letzten beiden Empfangspegelmessungen proportionalen Wert ist. Bei einem fallenden Empfangspegel wird die alte Zeitverzögerung erhöht, bei einem ansteigenden Empfangspegel wird sie erniedrigt, so daß bei einem Funkkanal mit steigendem Empfangspegel der Zeitraum bis zum nächsten Synchronisierungsversuch verkürzt ist, denn die Wahrscheinlichkeit der Geeignetheit eines solchen Funkkanals für ein "cell change" ist mit dem erhöhten Empfangspegel ebenfalls gestiegen.

Die Erfindung bezieht sich auch auf ein Mobilfunkendgerät der eingangs genannten Art, bei dem nach einem erfolglosen Versuch zur Synchronisierung auf einen Funkkanal ein weiterer Versuch zur Synchronisierung auf den Funkkanal nach einer von der bisherigen Anzahl erfolgloser Versuche zur Synchronisierung auf den ersten Funkkanal oder von der Anzahl Funkkanäle, auf die das Mobilfunkendgerät bereits synchronisiert ist, abhängigen Zeitverzögerung vorgesehen ist, ohne daß der Empfangspegel des Funkkanals in die Bestimmung der Zeitverzögerung eingeht. Auch diese Maßnahmen führen zu einer Reduzierung des Stromverbrauchs des Mobilfunkendgeräts.

Die Erfindung bezieht sich auch auf ein zellulares Mobilfunksystem, insbesondere ein GSM-Mobilfunksystem, in dem ein erfindungsgemäßes Mobilfunkendgerät eingesetzt wird.

Ausführungsbeispiele der Erfindung werden im folgenden anhand der Zeichnungen näher erläutert. Es zeigen:

Fig. 1 Ein Blockschaltbild eines Mobilfunkendgerätes und

Fig. 2 Eine Funkzelle eines Mobilfunksystems, die von dem Mobilfunkendgerät durchquert wird.

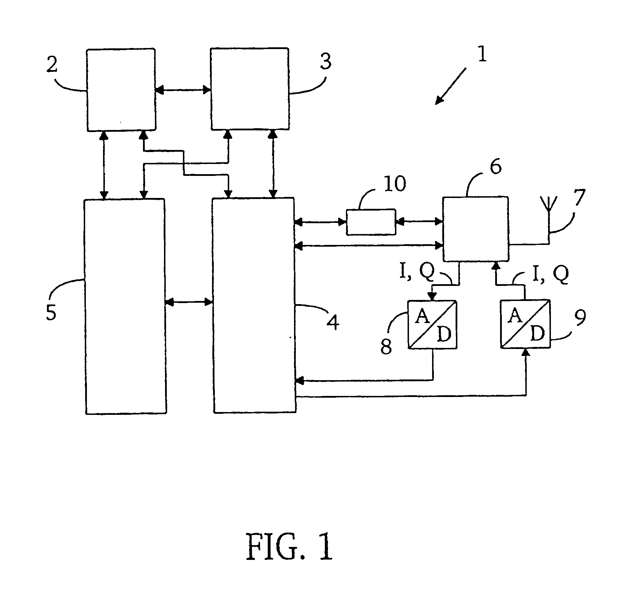

Das in Fig. 1 gezeigte Mobilfunkendgerät 1 enthält einen Programmspeicher 2 (z.B. ein EPROM oder ein PROM), einen Schreib-/ Lesespeicher 3 (RAM) und eine mittels eines digitalen Signalprozessors (DSP) realisierte Funktionseinheit 4, die zur Umsetzung von Signalverarbeitungsalgorithmen dient. Insbesondere übernimmt die Funktionseinheit 4 auch die Umsetzung von Algorithmen zur Sprachverarbeitung, Kanalcodierung-/Decodierung und Multiplex-/Demultiplex-Funktionen. Das erfindungsgemäße Mobilfunkendgerät ist insbesondere ein Gerät gemäß dem GSM-Mobilfunkstandard für zellulare Mobilfunknetze, so daß in dieser Ausführungsform als Multiplex-/Demultiplex-Verfahren das TDMA-Verfahren zur Anwendung kommt ("Time Division Multiple Access", Zeitmultiplex-Verfahren). Im Betrieb des Mobilfunkendgerätes 1 kommunizieren der Programmspeicher 2, der Schreib-/ Lesespeicher 3 und die Funktionseinheit 4 mit einer Steuereinheit 5, die in Mikroprozessortechnik realisiert ist und alle Programmabläufe im Mobilfunkendgerät 1 steuert.

Das Mobilfunkendgerät 1 enthält außerdem eine Sende-/Empfangseinheit (Transceiver) 6, die zum Empfangen und zum Senden von Funksignalen über eine Antenne 7 dient. Der Transceiver 6 enthält Mittel zur Umsetzung von empfangenen Funksignalen in ihre Quadraturkomponenten I und Q, die mittels eines Analog-/-Digital-Umsetzers 8 in Digitalsignale umgewandelt werden, die zur Weiterverarbeitung an die Funktionseinheit 4 gegeben werden. Weiterhin ist ein Analog-/Digital-Umsetzer 9 vorgesehen, der zur Umsetzung von von der Funktionseinheit 4 gelieferten Digitalsignalen in Quadraturkomponten I und Q dient, die vom Transceiver 6 in über die Antenne 5 zu sendende Funksignale umgesetzt wird.

Das Mobilfunkendgerät 1 enthält auch eine Synchronisationsfunktionseinheit 10, die zum Synchronisieren des Transceivers 6 und der Funktionseinheit 4 auf bestimmte Funkkanäle (d. h. auf über die bestimmten Funkkanäle übertragene Datenströme) dient, über die jeweils Funksignale von einer Basisstation eines zellularen Mobilfunknetzes gesendet werden. Die Synchronisationsfunktionseinheit 10 kann auch in den Transceiver 6 integriert sein. Weitere Komponenten des Mobilfunkendgeräts 1, die für das Verständnis der Erfindung unwesentlich sind, wurden aus Gründen der Übersichtlichkeit nicht dargestellt.

Im folgenden wird das Mobilfunkendgerät 1 zur näheren Beschreibung der Erfindung als Ausführungsform gemäß den GSM-Empfehlungen näher beschrieben.

Im sogenannten Idle-Modus empfängt das Mobilfunkendgerät 1 Systeminformations-Nachrichten ("system information") von einer in einer Funkzelle eines zellularen Mobilfunknetzes (PLMN) angeordneten Basisstation, in deren Wirkungsbereich bzw. Funkzelle sich des Mobilfunkendgerät 1 gerade befindet. Mittels der Systeminformations-Nachrichten empfängt das Mobilfunkendgerät 1 auch Information über Nachbarzellen der Funkzelle, in der sich das Mobilfunkendgerät 1 gerade befindet. Diese Informationen sind in einer sogenannten BA-Liste in der die Systeminformations-Nachrichten sendenden Basisstation abgelegt. Mittels der BA-Liste werden den Nachbarzellen Radiofrequenzkanalnummern ("ARFCN", Absolute Radio Frequency Channel Number") zugeordnet. Die BA-Liste enthält bis zu 32 Radiofrequenzkanalnummern. Jede ARFCN definiert einen Funkkanal, über den eine Kommunikation zwischen dem Mobilfunkendgerät 1 und der betreffenden Basisstation stattfinden kann. Ein als RRM ("Radio Resource Manager") bezeichnetes Software-Modul steuert eine Überwachung der Feldstärken der "Serving Cell" und der zu dieser gehörenden Nachbarzellen. Die Funktionen des RRM sind in den GSM-Spezifikationen 03.09 und 05.08, die sich auf Verbindungskontrollfunktionen beziehen, und in der GSM-Spezifikation 04.04, die sogenannte Schicht 1-Protokolle beschreibt, näher erläutert.

In der GSM-Spezifikation 05.08 ist vorgegeben, daß der BSIC der "Serving Cell" mindestens alle 30 Sekunden vom Mobilfunkendgerät 1 gelesen werden muß. Der BSIC der Nachbarzellen mit den sechs größten Empfangspegeln muß vom Mobilfunkendgerät 1 ebenfalls alle 30 Sekunden gelesen werden. Eine alle fünf Sekunden durchzuführende vom RRM gesteuerte Empfangspegelmessung erfolgt dabei mittels einer im Transceiver 6 angeordneten nicht näher dargestellten Meßanordnung. Die Auswertung der Meßpegel erfolgt durch die hierbei vom RRM gesteuerte Funktionseinheit 4. Eine Aktualisierung des gespeicherten Empfangspegelwertes bezüglich eines Funkkanals erfolgt dabei insbesondere durch Bildung des arithmetischen Mittelwertes aus dem alten Empfangspegelwert und dem gemessenen Empfangspegelwert:

$$level_{new} = (level_{old} + level_{meas}) / 2$$

mit $level_{new}$ = akualisierter, neuer Empfangspegelwert,
    $level_{old}$ = alter, gespeicherter Empfangspegelwert und
    $level_{meas}$ = gemessener Empfangspegelwert.

Auf diese Weise wird ein gleitender Mittelwert gebildet, der starke Pegelschwankungen glättet.

Mit dem Lesen eines BSIC einer Basisstation ist jeweils das Synchronisieren der Funktionseinheit 4 und des Transceivers 6 mittels der Synchronisationsfunktionseinheit 10 auf den entsprechenden Funkkanal verbunden, über den der jeweilige BSIC übertragen wird. Die Synchronisationsfunktionen sind in der GSM-Spezifikation 05.10 im einzelnen beschrieben. Ihre Umsetzung ist mit einem nicht zu vernachlässigenden Stromverbrauch verbunden.

Es kann nun durchaus vorkommen, daß nicht alle Funkkanäle von Nachbarzellen mit den sechs größten Empfangspegeln synchronisierbar sind. Beispielsweise können überlagerte Störsignale oder Fading-Effekte zur Nichtsynchronisierbarkeit führen. Bisherige Mobilfunkendgeräte versuchen trotzdem, sich auf derartige nicht synchronisierbare Funkkanäle zu synchronisieren. Dies führt zu einem erhöhten Stromverbrauch und zur Reduzierung der Stand-By-Zeit.

Um diesem Problem zu begegnen, wäre es denkbar, nach einer Feststellung einer Nichtsynchronisierbarkeit einer Funkzelle einfach weitere Synchronisierungsversuche zu unterdrücken. Ein solcher Ansatz wird jedoch der Tatsache nicht gerecht, daß ein zu einem bestimmten Zeitpunkt nicht synchronisierbarer Funkkanal zu einem späterem Zeitpunkt durchaus synchronisierbar sein kann, da Störsignale und Fading-Effekte durchaus zeitlich begrenzt sein können. Eine Zeitverzögerung vorzusehen, die den zeitlichen Abstand zwischen einem fehlgeschlagenen Synchronisierungsversuch und einem erneuten Synchronisierungsversuch bestimmt, führt zu einer problemgerechteren technischen Realisierung. Die Bestimmung einer geeigneten Zeitverzögerung wird nachfolgend beschrieben.

Die Zeitverzögerung in Bezug auf einen einer bestimmten Funkzelle n zugeordneten Funkkanal ist erfindungsgemäß abhängig von dem Empfangspegel $level_n$ bezüglich dieses Funkkanals, der Anzahl gescheiterter Synchronisierungsversuche auf den der Funkzelle n zugeordneten Funkkanal und der Anzahl Nachbarzellen der Funkzelle n mit zugeordneten Funkkanälen, auf die das Mobilfunkendgerät 1 bereits synchronisiert ist. Demgemäß wird die im folgenden mit $d_n$ bezeichnete Zeitverzögerung folgendermaßen bestimmt:

1. Falls $level_{serv} < level_n$, dann ist $d_n$ = MIN_DELAY_IDLE
2. Falls $level_{serv} \geq level_n$ , erfolgt eine Bestimmung von $d_n$ gemäß der folgenden Formel:

$$d_n = \text{MAX\_DELAY\_IDLE} \cdot C1 \cdot C2 \cdot C3 + \text{MIN\_DELAY\_IDLE}$$

mit

$$C1 = \frac{level_{serv} - level_n}{\text{MAX\_LEVEL\_GSM-RXLEV\_ACC\_MIN}} ,$$

$$C2 = \frac{m_{err}}{\text{MAX\_SYNC\_ERR\_IDLE}},$$

$$C3 = \frac{m_{neigh}}{\text{MAX\_SYNC\_CELL\_IDLE}}.$$

3. Falls $d_n$ > MAX_DELAY_IDLE, dann $d_n$ = MAX_DELAY_IDLE.

Die verwendeten Abkürzungen haben die folgenden Bedeutungen:

| | |
|---|---|
| $d_n$ = | Zeitverzögerung für einen einer Funkzelle n zugeordneten Funkkanal n (mit entsprechender ARFCN); |
| $level_{serv}$ = | Empfangspegel bezüglich der gerade die Funktion als "serving cell" für das Mobilfunkendgerät 1 ausübenden Funkzelle; |
| $level_n$ = | gemessener Empfangspegel des Funkkanals n; |
| $m_{err}$ = | Anzahl der letzten erfolglosen Versuche des Mobilfunkendgeräts 1 zur Synchronisierung auf den Funkkanal n; |
| $m_{neigh}$ = | Anzahl Funkkanäle von Nachbarzellen, auf die das Mobilfunkendgerät 1 gerade synchronisiert ist; |
| MAX_LEVEL_GSM = | maximaler Empfangspegel gemäß GSM 05.08 Kapitel 8.1.4 (> -48dbm bzw. RXLEV63); |
| RXLEV_ACC_MIN = | minimaler Empfangspegel, bei dem ein einer Funkzelle zugeordneter Funkkanal überhaupt für eine Kommunikation mit dem Mobilfunkendgerät 1 in Betracht kommt (im Bereich zwischen -106dbm und -105dbm bzw. RXLEV 5); |
| MIN_DELAY_IDLE = | minimale Zeitverzögerung im Idle-Modus (z.B. 15 Sekunden); |
| MAX_DELAY_IDLE = | maximal zulässige Zeitverzögerung im Idle-Modus (z.B. 75 Sekunden); |
| MAX_SYNC_CELL_IDLE = | maximale Anzahl Nachbarzellen im Idle-Modus (vorzugsweise gleich der Anzahl Nachbarzellen (32) in der BA-Liste der "Serving Cell"); |
| MAX_SYNC_ERR_IDLE = | maximale Anzahl fehlgeschlagener Synchronisierungsversuche auf einen Funkkanal im Idle-Modus (z.B. 15). |

Der Formel zur Bestimmung der Zeitverzögerung $d_n$ liegen folgende Überlegungen zugrunde:

1. Je geringer der Empfangspegel $level_n$ bezüglich eines Funkkanals n ist, desto weniger wahrscheinlich ist es, daß die dem Funkkanal n zugeordnete Basisstation BSn bzw. Funkzelle n für eine Auswahl oder Wiederwahl als "serving cell" ("cell selection", "cell reselection/cell change") in Frage kommt.

2. Mit der Anzahl $n_{err}$ erfolgloser Synchronisierungsversuche auf einen Funkkanal n steigt die Wahrscheinlichkeit, daß eine Synchronisation auf diesen Funkkanal überhaupt möglich ist. Dementsprechend ist die Zeitverzögerung $d_n$ zu erhöhen.

3. Je mehr Funkkanäle aus der Gruppe der sechs Funkkanäle mit den größten Empfangspegeln am Ort des Mobilfunkendgerätes 1 bereits vorliegen, auf die das Mobilfunkendgerät 1 erfolgreich synchronisiert ist, desto weniger wichtig ist es, eine Synchronisierung des Mobilfunkendgerätes 1 auf die übrigen aus der Gruppe der sechs erwähnten Funkkanäle durchzuführen. Aus diesem Grund geht die Anzahl $m_{neigh}$ der Funkkanäle von Nachbarzellen, auf die das Mobilfunkendgerät bereits synchronisiert ist, proportional in die Bestimmung der Zeitverzögerung $d_n$ ein.

Eine vereinfachte Bestimmung der Zeitverzögerung $d_n$ in der Weise, daß die Zeitverzögerung $d_n$ nicht von allen drei Parametern $level_n$, $m_{err}$ und $m_{neigh}$ abhängt, sondern entweder nur vom Parameter $level_n$, nur vom Parameter $m_{err}$, nur vom Parameter $m_{neigh}$, nur von den beiden Parametern $level_n$ und $m_{err}$, nur von den beiden Parametern $level_n$ und $m_{neigh}$ oder nur von den beiden Parametern $m_{err}$ und $m_{neigh}$, ist ebenfalls möglich. Eine derartige Bestimmung der Zeitverzögerung $d_n$ führt auch schon zu einer Reduzierung des Stromverbrauchs des Mobilfunkendgeräts 1 im Stand-By-Betrieb. Es ergeben sich folgende Bestimmungsgleichungen für die Zeitverzögerung $d_n$:

$$1. \quad d_n = MAX\_DELAY\_IDLE \cdot C1 + MIN\_DELAY\_IDLE ;$$

$$2. \quad d_n = MAX\_DELAY\_IDLE \cdot C2 + MIN\_DELAY\_IDLE ;$$

$$3. \quad d_n = MAX\_DELAY\_IDLE \cdot C3 + MIN\_DELAY\_IDLE ;$$

$$4. \quad d_n = MAX\_DELAY\_IDLE \cdot C1 \cdot C2 + MIN\_DELAY\_IDLE ;$$

$$5. \quad d_n = MAX\_DELAY\_IDLE \cdot C1 \cdot C3 + MIN\_DELAY\_IDLE ;$$

$$6. \quad d_n = MAX\_DELAY\_IDLE \cdot C2 \cdot C3 + MIN\_DELAY\_IDLE .$$

In Bezug auf Funkkanäle, auf die das Mobilfunkendgerät 1 erfolgreich synchronisiert werden konnte, schreiben die GSM-Empfehlungen die nachfolgenden Aktionen des Mobilfunkendgeräts 1 vor, die allerdings für die Erfindung unwesentlich sind.

Im folgenden wird beschrieben, wie die Zeitverzögerungsbestimmung verbessert werden kann, um einen noch weiter reduzierten Stromverbrauch des Mobilfunkendgeräts 1 zu erreichen. Eine derartige Ausgestaltung der Erfindung bezieht sich auf eine Anpassung einer bereits mindestens einmal berechneten Zeitverzögerung $d_n$ in Abhängigkeit von Empfangspegeländerungen des zugehörigen Funkkanals. Die Zeitverzögerungsanpassung erfolgt dabei gemäß der nachstehenden Formel:

$$d_{n, new} = d_{n, old} + \frac{level_{n, old} - level_{n,new}}{MAX\_GSM\_LEVEL - RXLEV\_ACC\_MIN} \cdot MAX\_DELAY\_IDLE$$

mit

$d_{n, new}$ =            neue Zeitverzögerung bzgl. des Funkkanals n;
$d_{n, old}$ =            alte Zeitverzögerung bzgl. des Funkkanals n;
$level_{n, old}$ =            im Mobilfunkendgerät gespeicherter alter Empfangspegelwert bzgl. des Funkkanals n;

$level_{n, new}$ =    neuer Empfangspegelwert bzgl. des Funkkanals n;
MAX_LEVEL_GSM =  siehe oben;
RXLEV_ACC_MIN =  siehe oben;
MAX_DELAY_IDLE =  siehe oben;

Je nach Häufigkeit von Empfangspegelmessungen zwischen zwei Synchronisierungsversuchen kann somit entsprechend der oben angeführten Formel in Abhängigkeit von einer Empfangspegeländerung ein neuer Zeitverzögerungswert $d_{n, new}$ aus dem vorhergehenden Zeitverzögerungswert $d_{n, old}$ rekursiv bestimmt werden. Aus der Formel ergibt sich, daß beim Ansteigen eines Empfangspegels eine Zeitverzögerungsverringerung und bei einem Empfangspegelabfall eine Zeitverzögerungserhöhung die Folge ist. Bei ansteigendem Empfangspegel wird somit die Zeitdauer bis zum nächsten Synchronisierungsversuch auf den zugehörigen Funkkanal verkürzt. Umgekehrt wird abfallendem Empfangspegel die Zeitdauer bis zum nächsten Synchronisierungsversuch auf den zugehörigen Funkkanal verlängert. Für den Fall, daß für den neuen Zeitverzögerungswert $d_{n, new}$ ein negativer Wert gemäß der oben stehenden Formel errechnet wird, wird $d_{n, new}$ auf den Wert Null gesetzt, d.h. es erfolgt ein umgehender Synchronisierungsversuch auf den zugehörigen Funkkanal n.

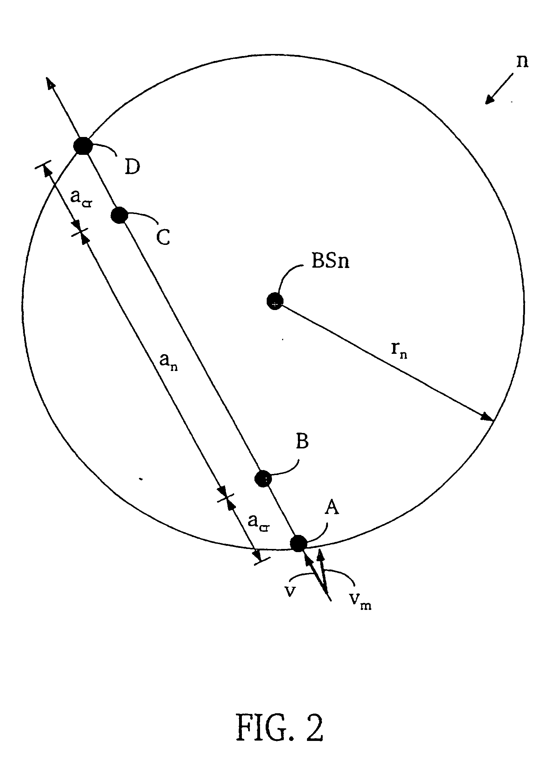

Eine weiter verbesserte Zeitverzögerungsberechnung wird im folgenden anhand von Fig. 2 erläutert. Fig. 2 zeigt eine Funkzelle n eines zellularen Mobilfunknetzes/-Systems mit einer Basisstation BSn. Der von der Basisstation BSn abgedeckte Bereich ist näherungsweise durch einen Kreis mit dem Radius $r_n$ dargestellt. In der Realität hat der von der Funkzelle n abgedeckte Bereich in Abhängigkeit von der Umgebung der Basisstation BSn und auch von zeitlich sich ändernden Funkverhältnissen im Regelfall eine von der Kreisform abweichende Form. Die Linie entlang der Punkte A, B, C und D gibt einen möglichen Weg des Mobilfunkendgeräts 1 durch die Funkzelle n an. Die Geschwindigkeit des Mobilfunkendgerätes 1 ist durch die mit v und $v_m$ bezeichneten Vektorpfeile angedeutet. v soll die wirkliche Geschwindigkeit des Mobilfunkendgerätes 1 in Bewegungsrichtung andeuten. $v_m$ gibt die Geschwindigkeitskomponente in Richtung auf die Basisstation BSn an. Die Geschwindigkeitskomponente $v_m$ wird gemessen und als Relativgeschwindigkeit zwischen dem Mobilfunkendgerät 1 und der Basisstation BSn betrachtet. Eine Messung von $v_m$ kann beispielsweise durch Auswertung des sogenannten Dopplereffektes erfolgen. Die Geschwindigkeitskomponente $v_m$ ist für Fälle mit hohen Geschwindigkeiten des Mobilfunkendgerätes 1, z.B. bei der Verwendung in auf Autobahnen bewegten Kraftfahrzeugen, in der Regel eine gute Näherung für die wirkliche Geschwindigkeit v, da davon auszugehen ist, daß Basisstationen, die einen Autobahnbereich abdecken sollen, in der Nähe der jeweiligen Autobahn positioniert sind. Die Geschwindigkeit $v_m$ geht so in die Berechnung einer Zeitverzögerung $d_n$ ein, daß eine erhöhte Geschwindigkeit die Zeitverzögerung $d_n$ reduziert und eine reduzierte Geschwindigkeit $v_m$ zu einer demgegenüber höheren Zeitverzögerung $d_n$ führt. Insbesondere geht die Geschwindigkeit $v_m$ antiproportional in den Wert MAX_DELAY_IDLE ein. Bei geringen Geschwindigkeiten v bzw. $v_m$ des Mobilfunkendgerätes 1 kann eine Geschwindigkeitsberücksichtigung bei der Zeitverzögerungsberechnung entfallen, so daß dann auch ein größeres Abweichen von v und $v_m$ unerheblich ist.

Der Punkt A bezeichnet in Fig. 2 den Eintrittspunkt des Mobilfunkendgeräts 1 in die Funkzelle n. Nach Zurücklegen der Strecke $a_{cr}$ wird der Punkt B erreicht, der ein Stück weit in der Funkzelle n liegt und den Optimalpunkt andeuten soll, an dem die Funkzelle n die Funktion als "Serving Cell" übernimmt. Nach Durchlaufen der Strecke $a_n$ erreicht das Mobilfunkendgerät 1 den Punkt C, der den Optimalpunkt zum Übergang der Funktion "Serving Cell" von der Funkzelle n auf eine Nachbarfunkzelle darstellt. Nach der Strecke $a_{cr}$ wird der Punkt D erreicht, an dem das Mobilfunkendgerät 1 die Funkzelle n verläßt.

Die Erfindung ist in GSM-Mobilfunkendgeräten zusätzlich zur beschriebenen Anwendung im sogenannten "idle mode" auch zur analogen Anwendung im sogenannten "emergency idle mode" geeignet.

**Patentansprüche**

1.  Mobilfunkendgerät mit Mitteln (10) zur Synchronisierung auf von Basisstationen (BSn) eines zellularen Mobilfunknetzes gesendete und über Funkkanäle übertragene Datenströme,
    **dadurch gekennzeichnet,**
    **daß** nach einem erfolglosen Versuch zur Synchronisierung auf einen einen bestimmten Empfangspegel ($level_n$) aufweisenden ersten Funkkanal ein weiterer Versuch zur Synchronisierung auf den ersten Funkkanal nach einer von dem Empfangspegel ($level_n$) des ersten Funkkanals abhängigen Zeitverzögerung ($d_n$) vorgesehen ist.

2.  Mobilfunkendgerät nach Anspruch 1,
    **dadurch gekennzeichnet,**
    **daß** eine Bestimmung der Zeitverzögerung ($d_n$) durch die Summe aus einem vorgebbaren Zeitverzögerungsminimalwert (MIN_DELAY_IDLE) und einem zur Differenz ($level_{serv} - level_n$) des Empfangspegels ($level_{serv}$) eines zweiten Funkkanals, über den gerade eine Verbindung zu einer Basisstation aufgebaut ist, und des Empfangspe-

gels (level$_n$) des ersten Funkkanals proportionalen Wert vorgesehen ist.

3. Mobilfunkendgerät nach Anspruch 1 oder 2,
   **dadurch gekennzeichnet,**
   **daß** die Zeitverzögerung (d$_n$) von der bisherigen Anzahl erfolgloser Versuche (m$_{err}$) zur Synchronisierung auf den ersten Funkkanal und/oder von der Anzahl (m$_{neigh}$) Funkkanäle, auf die das Mobilfunkendgerät bereits synchronisiert ist, abhängig ist.

4. Mobilfunkendgerät nach Anspruch 3,
   **dadurch gekennzeichnet,**
   **daß** eine Bestimmung der Zeitverzögerung (d$_n$) durch die Summe aus einem vorgebbaren Zeitverzögerungsminimalwert (MIN_DELAY_IDLE) und einem zur bisherigen Anzahl erfolgloser Versuche (m$_{err}$) zur Synchronisierung auf den ersten Funkkanal proportionalen Wert vorgesehen ist.

5. Mobilfunkendgerät nach Anspruch 3 oder 4,
   **dadurch gekennzeichnet,**
   **daß** eine Bestimmung der Zeitverzögerung (d$_n$) durch die Summe aus einem vorgebbaren Zeitverzögerungsminimalwert (MIN_DELAY_IDLE) und einem zur Anzahl (m$_{neigh}$) Funkkanäle, auf die das Mobilfunkendgerät bereits synchronisiert ist, proportionalen Wert vorgesehen ist.

6. Mobilfunkendgerät nach einem der Ansprüche 1 bis 5,
   **dadurch gekennzeichnet,**
   **daß** die Zeitverzögerung (d$_n$) von der Geschwindigkeit (v) des Mobilfunkendgeräts relativ zu der Basisstation (BS$_n$), der der erste Funkkanal zugeordnet ist, abhängig ist.

7. Mobilfunkendgerät nach Anspruch 6,
   **dadurch gekennzeichnet,**
   **daß** eine Bestimmung der Zeitverzögerung (d$_n$) durch die Summe aus einem vorgebbaren Zeitverzögerungsminimalwert (MIN_DELAY_IDLE) und einem zur Geschwindigkeit (v) des Mobilfunkendgeräts relativ zu der Basisstation (BS$_n$), der der erste Funkkanal zugeordnet ist, antiproprotionalen Wert vorgesehen ist.

8. Mobilfunkendgerät nach einem der Ansprüche 1 bis 7,
   **dadurch gekennzeichnet,**
   **daß** eine Anpassung der Zeitverzögerung (d$_n$) vorgesehen ist, wobei die angepaßte Zeitverzögerung (d$_{n,\ new}$) von der vorhergehenden Zeitverzögerung (d$_{n,\ old}$) und der Differenz (level$_{n,\ old}$ - level$_{n,\ new}$) der Empfangspegel aus den letzten beiden Empfangspegelmessungen abhängig ist.

9. Mobilfunkendgerät nach Anspruch 8,
   **dadurch gekennzeichnet,**
   **daß** die angepaßte Zeitverzögerung (d$_{n,\ new}$) die Summe aus der vorhergehenden Zeitverzögerung (d$_{n,\ old}$) und einem zur Differenz (level$_{n,\ old}$ - level$_{n,\ new}$) der Empfangspegel aus den letzten beiden Empfangspegelmessungen proportionalen Wert ist.

10. Mobilfunkendgerät mit Mitteln (10) zur Synchronisierung auf von Basisstationen (BSn) eines zellularen Mobilfunknetzes gesendete und über Funkkanäle übertragene Datenströme,
    **dadurch gekennzeichnet,**
    **daß** nach einem erfolglosen Versuch zur Synchronisierung auf einen Funkkanal ein weiterer Versuch zur Synchronisierung auf den Funkkanal nach einer von der bisherigen Anzahl erfolgloser Versuche (m$_{err}$) zur Synchronisierung auf den ersten Funkkanal abhängigen Zeitverzögerung (d$_n$) vorgesehen ist.

11. Mobilfunkendgerät mit Mitteln (10) zur Synchronisierung auf von Basisstationen (BSn) eines zellularen Mobilfunknetzes gesendete und über Funkkanäle übertragene Datenströme,
    **dadurch gekennzeichnet,**
    **daß** nach einem erfolglosen Versuch zur Synchronisierung auf einen Funkkanal ein weiterer Versuch zur Synchronisierung auf den Funkkanal nach einer von der Anzahl (m$_{neigh}$) Funkkanäle, auf die das Mobilfunkendgerät bereits synchronisiert ist, abhängigen Zeitverzögerung (d$_n$) vorgesehen ist.

12. Zellulares Mobilfunksystem mit mindestens einem Mobilfunkendgerät nach einem der Ansprüche 1 bis 11.

**Claims**

1. A mobile radio terminal comprising means (10) for synchronization with data streams transmitted over radio channels by base stations (BSn) of a cellular mobile radio network, **characterized in that**, after an unsuccessful attempt at synchronization with a first radio channel that has a certain receiving level ($level_n$), another attempt at synchronization with the first radio channel is made after a delay ($d_n$) that depends on the receiving level ($level_n$) of the first radio channel.

2. A mobile radio terminal as claimed in claim 1, **characterized in that** the delay ($d_n$) is formed by the sum of a predefinable minimum delay value (MIN_DELAY_IDLE) and a value proportional to the difference ($level_{serv}$-$level_n$) between the receiving level ($level_{serv}$) of a second radio channel over which a connection to a base station is set up at that moment, and proportional to the receiving level ($level_n$) of the first radio channel.

3. A mobile radio terminal as claimed in claim 1 or 2, **characterized in that** the delay ($d_n$) depends on the number of thus far unsuccessful attempts ($m_{err}$) at synchronization with the first radio channel and/or on the number ($m_{neigh}$) of radio channels with which the mobile radio terminal has already been synchronized.

4. A mobile radio terminal as claimed in claim 3, **characterized in that** the delay ($d_n$) is determined by the sum of a predefinable minimum delay value (MIN_DELAY_IDLE) and a value proportional to the number of thus far unsuccessful attempts ($m_{err}$) at synchronization with the first radio channel.

5. A mobile radio terminal as claimed in claim 3 or 4, **characterized in that** the delay ($d_n$) is determined by the sum of a predefinable minimum delay value (MIN_DELAY_IDLE) and a value proportional to the number of radio channels ($m_{neigh}$) with which the mobile radio terminal has already been synchronized.

6. A mobile radio terminal as claimed in one of the claims 1 to 5, **characterized in that** the delay ($d_n$) depends on the velocity (v) of the mobile radio terminal relative to the base station (BSn) to which base station the first radio channel is assigned.

7. A mobile radio terminal as claimed in claim 6, **characterized in that** the delay ($d_n$) is determined by the sum of a predeterminable minimum delay value (MIN_DELAY_IDLE) and a value proportional to the velocity (v) of the mobile radio terminal relative to the base station (BSn) to which base station the first radio channel is assigned.

8. A mobile radio terminal as claimed in one of the claims 1 to 7, **characterized in that** the delay ($d_n$) is adapted, which adapted delay the adapted delay ($d_{n,new}$) depends on the previous delay ($d_{n,old}$) and on the difference ($level_{n,old}$-$level_{n,new}$) of the receiving levels which difference results from the last two measurements of the receiving level.

9. A mobile radio terminal as claimed in claim 8, **characterized in that** the adapted delay ($d_{n,new}$) is the sum of the previous delay ($d_{n,old}$) and a value proportional to the difference ($level_{n,old}$-$level_{n,new}$) of the receiving levels of the last two receiving level measurements.

10. A mobile radio terminal comprising means (10) for synchronization with data streams sent by base stations (BSn) of a cellular mobile radio network and transmitted over radio channels, **characterized in that** an unsuccessful attempt at synchronization with a radio channel is followed by a further attempt at synchronization with the radio channel after a delay ($d_n$) that depends on the number of thus far unsuccessful attempts ($m_{err}$) at synchronization with the first radio channel.

11. A mobile radio terminal comprising means (10) for synchronization with data streams sent by base stations (BSn) of a cellular mobile radio network and transmitted over radio channels, **characterized in that** an unsuccessful attempt at synchronization with a radio channel is followed by a further attempt at synchronization with the radio channel after a delay ($d_n$) that depends on the number of radio channels ($m_{neigh}$) with which the mobile radio terminal has already been synchronized.

12. A cellular mobile radio system comprising at least one mobile radio terminal as claimed in one of the claims 1 to 11.

**Revendications**

1. Terminal radiomobile avec des moyens (10) pour la synchronisation sur des flux de données envoyés par des stations de base (BSn) d'un réseau radiomobile cellulaire et transmis par l'intermédiaire de canaux radio,
   **caractérisé en ce**
   **qu'**après une tentative infructueuse de synchronisation sur un premier canal radio présentant un niveau de réception déterminé (leveln), une tentative supplémentaire de synchronisation sur le premier canal radio est prévue après un retard temporel (dn) dépendant du niveau de réception (leveln) du premier canal radio.

2. Terminal radiomobile selon la revendication 1,
   **caractérisé en ce**
   **qu'**il est prévu une détermination du retard temporel (dn) par la somme d'une valeur minimale du retard temporel à déterminer préalablement (MIN_DELAY_IDLE) et d'une valeur proportionnelle à la différence (levelserv - leveln) du niveau de réception (levelserv) d'un deuxième canal radio par l'intermédiaire duquel une liaison vers une station de base est précisément établie et du niveau de réception (leveln) du premier canal radio.

3. Terminal radiomobile selon une des revendications 1 ou 2,
   **caractérisé en ce**
   **que** le retard temporel (dn) dépend du nombre de tentatives infructueuses jusqu'à présent (merr) pour la synchronisation sur le premier canal radio et/ou du nombre (mneigh) de canaux radio sur lesquels le terminal radiomobile est déjà synchronisé.

4. Terminal radiomobile selon la revendication 3,
   **caractérisé en ce**
   **qu'**il est prévu une détermination du retard temporel (dn) par la somme d'une valeur minimale de retard temporel (MIN_DELAY_IDLE) à déterminer préalablement et d'une valeur proportionnelle au nombre de tentatives infructueuses jusqu'à présent (merr) pour la synchronisation sur le premier canal radio.

5. Terminal radiomobile selon l'une des revendications 3 ou 4,
   **caractérisé en ce**
   **qu'**il est prévu une détermination du retard temporel (dn) par la somme d'une valeur minimale du retard temporel (MIN_DELAY_IDLE) à déterminer préalablement et d'une valeur proportionnelle au nombre (mneigh) de canaux radio sur lesquels le terminal radiomobile est déjà synchronisé.

6. Terminal radiomobile selon l'une des revendications 1 à 5,
   **caractérisé en ce**
   **que** le retard temporel (dn) dépend de la vitesse (v) du terminal radiomobile par rapport à la station de base (BSn) à laquelle est affecté le premier canal radio.

7. Terminal radiomobile selon la revendication 6,
   **caractérisé en ce**
   **qu'**il est prévu une détermination du retard temporel (dn) par la somme d'une valeur minimale de retard temporel (MIN_DELAY_IDLE) à déterminer préalablement et d'une valeur inversement proportionnelle à la vitesse (v) du terminal radiomobile par rapport à la station de base (BSn) à laquelle est affecté le premier canal radio.

8. Terminal radiomobile selon l'une des revendications 1 à 7,
   **caractérisé en ce**
   **qu'**il est prévu une adaptation du retard temporel (dn), le retard temporel adapté (dn,new) dépendant du retard temporel précédent (dn,old) et de la différence (leveln,old - leveln,new) du niveau de réception à partir des deux dernières mesures du niveau de réception.

9. Terminal radiomobile selon la revendication 8,
   **caractérisé en ce**
   **que** le retard temporel adapté (dn,new) est la somme du retard temporel précédent (dn,old) et d'une valeur proportionnelle à la différence (leveln,old - leveln,new) des niveaux de réception des deux dernières mesures du niveau de réception.

10. Terminal radiomobile avec des moyens (10) pour la synchronisation sur des flux de données envoyés par des stations de base (BSn) d'un réseau radiomobile cellulaire et transmis par l'intermédiaire de canaux radio, **caractérisé en ce** qu'après une tentative infructueuse de synchronisation sur un canal radio, une nouvelle tentative de synchronisation sur le canal radio est prévue après un retard temporel (dn) dépendant du nombre de tentatives infructueuses jusqu'à présent (merr) de synchronisation sur le premier canal radio.

11. Terminal radiomobile avec des moyens (10) pour la synchronisation sur des flux de données envoyés par des stations de base (BSn) d'un réseau radiomobile cellulaire et transmis par l'intermédiaire de canaux radio, **caractérisé en ce** qu'après une tentative infructueuse de synchronisation sur un canal radio, une nouvelle tentative de synchronisation sur le canal radio est prévue après un retard temporel (dn) dépendant du nombre (mneigh) de canaux radio sur lesquels le terminal radiomobile est déjà synchronisé.

12. Système radiomobile cellulaire avec au moins un terminal radiomobile selon l'une des revendications 1 à 11.

FIG. 1

FIG. 2